# EUROPÄISCHE PATENTANMELDUNG

(11) **EP 1 930 303 A1**
(43) Veröffentlichungstag der Anmeldung: **11.06.2008**
(21) Anmeldenummer: 06023555.3
(22) Anmeldetag: 13.11.2006
(51) Int. Cl.: C04B 2/10, C04B 7/36, C04B 7/43, C04B 7/44

(54) **Verfahren und Vorrichtung zur thermischen Behandlung von Rohstoffen**

(71) Anmelder: Montanuniversität Leoben, 8700 Leoben (AT)
(72) Erfinder: Kepplinger, Werner, 4060 Leonding (AT); Hollauf, Bernd, 8020 Graz (AT)
(74) Vertreter: Dilg, Andreas

(57) **Zusammenfassung**

Die Erfindung betrifft ein Verfahren und eine Vorrichtung zur thermischen Behandlung von Rohstoff, insbesondere von Zementrohmehl, Kalkstein, Dolomit oder Magnesit, wobei die thermische Behandlung des Rohstoffs unter Zufuhr von Rohbiogas als Brennstoff erfolgt.

## Beschreibung

Die Erfindung betrifft ein Verfahren und eine Vorrichtung zur thermischen Behandlung von Rohstoff, insbesondere von Zementrohmehl, Kalkstein, Dolomit oder Magnesit.

Durch thermische Behandlung (Brennen, Kalzinieren) lassen sich Rohstoffe in entsprechende Produkte umwandeln. Beispielsweise erfolgt die Herstellung von Zement bzw. Zementklinkern durch thermische Behandlung von Zementrohmehl. Die üblicherweise bei der thermischen Behandlung von Zementrohmehl verwendeten hochwertigen Brennstoffe sind Öl, Gas und/oder hochwertige Kohle. Flüssige bzw. gasförmige Brennstoffe sind gegenüber Festbrennstoffen wie etwa Kohlenstaub häufig vorzuziehen, da bei Festbrennstoffen unter Umständen schwerbrennbare Anteile, wie z. B. Anthrazit, enthalten sind. Der Einsatz von Erdgas, Erdöl oder Kohle als Brennstoff ist insoweit nachteilig als dass es sich bei vorgenannten Brennstoffen nicht um regenerative Brennstoffe handelt und die Verfügbarkeit entsprechend beschränkt ist. Daher wurden zahlreiche Überlegungen angestellt, vorgenannte Brennstoffe durch alternative Brennstoffe zu ersetzen bzw. durch minderwertige Brennstoffe zu ergänzen.

Als minderwertige Brennstoffe wurden beispielsweise alte Autoreifen, Ölschiefer, Säureharze, Kohle mit hohem Aschegehalt oder anderweitige niederkalorige Brennstoffe vorgeschlagen. Allerdings werden bei der Zementherstellung minderwertige und besonders aschereiche Brennstoffe üblicherweise allenfalls ergänzend eingesetzt, da sie einen zu geringen Heizwert aufweisen und aufgrund schwankender bzw. zu hoher Aschegehalte die Qualität des Zements so verändern, dass er den normierten Qualitätsanforderungen nicht genügt. Desweiteren haben minderwertige Brennstoffe häufig den Nachteil, dass sie einen hohen Gehalt an Begleitstoffen aufweisen, die nicht oder nur teilweise in den Zement gelangen dürfen.

Entsprechende Verfahren zur Herstellung von Zementklinkern bzw. zur thermischen Behandlung von Rohstoffen unter Einsatz von minderwertigen Brennstoffen wurden bereits beschrieben.

Während des Erhitzens und Brennens von Rohstoffen wie etwa Zementrohmehl wird je nach Art und Herkunft der Rohstoffe ein mehr oder weniger großer Anteil an flüchtigen Schadstoffen freigesetzt. Aufgrund entsprechender staatlicher bzw. behördlicher Auflagen muss dafür Sorge getragen werden, dass die entstehenden Schadstoffe nicht in größeren Mengen mit den Abgasen oder den gefertigten Produkten in die Umwelt gelangen. Es ist bekannt, dass in Vorrichtungen zur thermischen Behandlung von Rohstoffen insbesondere Stickoxide entstehen. Beispielsweise bilden sich in Drehrohröfen, die häufig zur Herstellung von Zementklinkern verwendet werden, infolge der hohen Brennflammentemperaturen bei der thermischen Behandlung erhebliche Mengen NOₓ, die aus den Abgasen entfernt werden müssen, da sie als Umweltgifte wirken. Auch schwefelhaltige Schadstoffe wie beispielsweise SO₂ sollten nicht in die Umwelt gelangen.

Der Begriff "Stickoxide" (NOₓ) umfasst neben Verbindungen wie Stickstoffdioxid und seinen Dimeren auch Stickstoffmonoxid (NO), welches bei der Verbrennung primär entsteht. Die in Anlagen zur thermalen Behandlung von Rohstoffen entstehenden Stickoxide führen unter der Einwirkung von Sonnenlicht beispielsweise zur Bildung von Smog der gesundheitliche Schäden und Vegetationsschäden verursachen kann. Es wurden daher bereits mehrere verschiedene Verfahren vorgeschlagen um den Stickoxidgehalt in Verbrennungsabgasen zu reduzieren. Die am meisten verbreiteten Verfahren zur Entfernung von Stickoxiden aus Abgasen stellen Varianten von nicht-katalytisch arbeitenden SNCR (selective non catalytic reduction)-Verfahren bzw. von katalytisch betriebenen SCR (selective catalytic reduction)-Verfahren dar. Bei beiden Verfahren wird Ammoniak bzw. Ammoniak-freisetzende Verbindungen als Reduktionsmittel eingesetzt.

Bei SNCR-Verfahren wird eine wässrige Ammoniak- oder Harnstofflösung bei Temperaturen von etwa 850 bis 1000°C über ein Düsensystem in den Feuerungsraum der Verbrennungsanlage eingebracht. Üblicherweise wird ein stöchiometrischer Überschuss an Ammoniak zu Stickoxiden von 2 - 3 zugesetzt.

Beim sogenannten SCR-Verfahren wird der Ammoniak in Gemisch mit Luft in stöchiometrischer Menge zum Stickoxid zugesetzt und die Ammoniak-haltigen Abgase anschließend über einen Katalysator geleitet.

Beiden vorgenannten Verfahren ist gemeinsam, dass größere Mengen an Ammoniak bzw. Ammoniak-haltigen Verbindungen transportiert und gelagert werden müssen. Der Transport und die Lagerung von giftigem Ammoniak ist mit einem erheblichen Sicherheitsaufwand verbunden.

Die vorhergehenden Ausführungen gelten in analoger Weise für die thermische Behandlung von anderen Rohstoffen wie beispielsweise Kalkstein, Dolomit oder Magnesit. Auch bei der Kalzinierung von beispielsweise Kalkstein zur Erzeugung von Branntkalk entstehen in der Brennkammer die oben genannten Schadstoffe und insbesondere Stickoxide.

Der Erfindung liegt die Aufgabe zugrunde ein Verfahren sowie eine Vorrichtung bereitzustellen, welche die thermische Behandlung von Rohstoff, insbesondere von Zementrohmehl, ermöglicht, wobei die mit dem Einsatz nicht regenerativer Brennstoffe und minderwertiger Brennstoffe verbundenen Nachteile vermieden werden und die Schadstoffreduzierung auf möglichst einfache und sichere Art und Weise erfolgt.

Diese Aufgabe wird durch die Gegenstände gemäß den unabhängigen Patentansprüchen gelöst.

Gemäß einem Aspekt der vorliegenden Erfindung wird ein Verfahren zur thermischen Behandlung von Rohstoff bereitgestellt, wobei die thermische Behandlung des Rohstoffs unter Zufuhr von Brennstoff erfolgt und wobei als Brennstoff Rohbiogas verwendet wird. Das erfindungsgemäße Verfahren ist insbesondere für das Kalzinieren von Zementrohmehl bzw. das Brennen von Zementrohmehl zu Zementklinkern sowie für die thermische Behandlung anderer partikulärer Rohstoffe geeignet.

Ein "Brennstoff" im Sinne der vorliegenden Erfindung ist ein brennbares Material das gespeicherte Energie durch Oxidation bzw. Verbrennung in nutzbare Energie umwandelt. Die Beurteilung der Qualität eines Brennstoffes hinsichtlich seines Vermögens Wärme zu liefern kann durch seinen Heizwert erfolgen.

Als "Biogas" wird das bei der bakteriellen Zersetzung organischer Stoffe wie etwa Gras, Klärschlamm, etc. entstehende Gas bezeichnet. Bei dem üblicherweise als Heizgas verwendeten Biogas handelt es sich um gereinigtes Biogas. Gereinigtes Biogas, wie es beispielsweise für den Verbrennungsvorgang in Gasmotoren verwendet wird, enthält keinen Schwefelwasserstoff und keinen Ammoniak. "Rohbiogas" im Sinne der vorliegenden Erfindung ist unbehandeltes Biogas bzw. Biogas, das neben den Hauptkomponenten Methan und Kohlendioxid auch Ammoniak und Schwefelwasserstoff sowie ggf. weitere Komponenten enthält.

Bei einem "partikulärem Rohstoff" im Sinne der vorliegenden Erfindung handelt es sich beispielsweise um eine pulverige, feinkörnige, grobkörnige oder stückige Substanz bzw. ein Substanzgemisch.

Gemäß der vorliegenden Erfindung wurde gefunden, dass der Einsatz von Rohbiogas als Brennstoff bei der thermischen Behandlung von Rohstoffen, insbesondere von Zementrohmehl, in mehrerlei Hinsicht vorteilhaft ist. In Rohbiogas ist neben Methan und Kohlendioxid als Hauptkomponenten auch Schwefelwasserstoff, Stickstoff, Wasserdampf, Wasserstoff und Ammoniak enthalten. Die typische Zusammensetzung von Rohbiogas ist in Tabelle 1 angegeben.

**Tabelle 1**

| **Komponenten** | **Schwankungsbreite** | **Durchschnitt** |
|---|---|---|
| Methan | 45-70 % | 60 % |
| Kohlendioxid | 25-55 % | 35 % |
| Wasserdampf | 0 - 10 % | 3,1 % |
| Stickstoff | 0,01 - 5 % | 1 % |
| Sauerstoff | 0,01 - 2 % | 0,3 % |
| Wasserstoff | 0 - 1 % | < 1 % |
| Ammoniak | 0,01 - 2,5 mg/m³ | 0,7 mg/m³ |
| Schwefelwasserstoff | 10 - 30.000 mg/m³ | 500 mg/m³ |

Großtechnisch wird Biogas mit Hilfe bestimmter Mikroorganismen unter anderem aus Abfallprodukten der Landwirtschaft gewonnen. Weiterhin sind auch vergärbare, biomassehaltige Reststoffe wie Klärschlamm, Bioabfall oder Speisereste zur Erzeugung von Rohbiogas geeignet. Darüber hinaus werden vermehrt Pflanzen gezielt zur Produktion von Biogas angebaut (NAWARO - NAchWachsende Rohstoffe). Der Prozess des anaeroben Abbaus erfolgt üblicherweise in einer Biogasanlage in einem beheizten Faulturm. In dem gesteuerten Prozess der Biogasentstehung sind verschiedenste Arten von anaeroben Mikroorganismen beteiligt, deren Mengenverhältnis zueinander durch Ausgangsstoffe, pH-Wert, Temperatur und Faulungsverlauf beeinflusst wird. Zur Aufrechterhaltung des Faulprozesses muss die Temperatur in der Biogasanlage entsprechend aufrechterhalten werden. Für den Gesamtwirkungsgrad einer Biogasanlage ist daher die optimale Nutzung der bei der Verbrennung von Biogas entstehenden Abwärme und eine Temperaturregelung im Prozess entscheidend. Das entstehende Rohbiogas reichert sich über der Biomasse an und wird, gegebenenfalls nach Passieren eines Filtersystems, üblicherweise in einem gesonderten Gasspeichertank aufgefangen und zwischengelagert. Der Heizwert von Biogas liegt üblicherweise im Bereich zwischen 18 und 28 MJ/m³.

Biogas wird bereits in relativ großem Maßstab erzeugt und kommt als Heiz- oder Brenngas, beispielsweise in Heizkraftwerken oder Gasmotoren, zum Einsatz. Allerdings muss das Biogas für vorgenannte Anwendungen eine hohe Gasreinheit aufweisen, da die im Rohbiogas enthaltenen Bestandteile Schwefelwasserstoff und Ammoniak nicht nur als Umweltschadstoffe klassifiziert sind, sondern auch zur Korrosion der entsprechenden Anlagen bzw. Motoren führen. Die Reinigung und Aufbereitung von Rohbiogas ist relativ aufwändig und daher auch kostenintensiv. Die operativen und finanziellen Aufwendungen die mit der Aufreinigung von Rohbiogas verbunden sind stehen der wirtschaftlichen Nutzung von Biogas noch häufig entgegen. In dem erfindungsgemäßen Verfahren und der erfindungsgemäßen Vorrichtung zur thermischen Behandlung von Rohstoff kann - entgegen der vorgenannten Anwendungsmöglichkeiten von Biogas - Rohbiogas, also unbehandeltes Biogas, in vorteilhafter Weise eingesetzt werden.

Wenn nachfolgend auf Verfahren zur thermischen Behandlung von Zementrohmehl Bezug genommen wird, so gelten die entsprechenden Ausführungen in analoger Weise für andere Rohstoffe, wie beispielsweise Kalkstein oder Dolomit.

Die Herstellung von Zement umfasst das Gewinnen und Aufbereiten von Rohstoffen, das Brennen der Rohstoffe zu Zementklinkern, das Herstellen von sogenannten Zumahlstoffen sowie das gemeinsame Vermahlen der Zementklinker mit den Zumahlstoffen. Die üblicherweise verwendeten Rohstoffe, Kalkstein und Ton, werden trocken zu einem Rohstoff aufgemahlen und liefern das sogenannte Zementrohmehl, welches getrocknet, erwärmt und schließlich zu Zementklinkern gebrannt wird. Das Brennen des Zementrohmehls erfolgt häufig in sogenannten Drehrohröfen, die unter 3 bis 4° geneigt sind. Infolge Neigung und Drehung des Ofens läuft das am oberen Ende zugeführte Zementrohmehl einer mit Brennstoff betriebenen Flamme entgegen die am unteren Ende des Ofens brennt.

In dem erfindungsgemäßen Verfahren können nicht nur die mit der aufwändigen Reinigung von Biogas verbundenen Nachteile vermieden werden, sondern der Einsatz von Rohbiogas im erfindungsgemäßen Verfahren ist auch dahingehend als vorteilhaft anzusehen als dass die im Rohbiogas enthaltenen "Schadstoffe" nutzbringend eingesetzt werden.

In Zementrohmehl sind größere Gehalte an Kalkstein (Calciumcarbonat, CaCO₃) enthalten. Bei der Zementherstellung wird das Calciumcarbonat bei hohen Temperaturen kalziniert. Dabei läuft folgende Reaktion ab:

CaCO₃ → CaO + CO₂

Die vorgenannte auch als Kalkbrennen bezeichnete Reaktion wird im Rahmen der Zementherstellung üblicherweise durch Verbrennung von nicht erneuerbaren Brennstoffen in einem entsprechenden Reaktionsraum wie beispielsweise einem Drehrohrofen bewirkt. Es wurde gefunden, dass bei dem vorgenannten thermischen Behandlungsschritt der herkömmliche Brennstoff aus nicht nachwachsenden Stoffen (Gas, Öl) durch Rohbiogas ersetzt werden kann. Rohbiogas stellt hierbei nicht nur eine wirtschaftlich interessante Alternative zu den herkömmlichen Brennstoffen dar, sondern weist zusätzlich eine stickoxidreduzierende Wirkung auf und reduziert auch die dem Zement als Abbinderegler zuzusetzende Menge an Gips. Die vorgenannten Vorteile gehen auf das Vorhandensein von Ammoniak und Schwefelwasserstoff im Rohbiogas zurück.

Bei der thermischen Behandlung mit Rohbiogas als Brennstoff wird der im Rohbiogas enthaltene Schwefelwasserstoff nach folgender Gleichung zu Schwefeldioxid umgesetzt:

2 H₂S + 3 O₂ → 2 SO₂ + 2 H₂O

Durch den Luftüberschuss wird beim Verbrennungsprozess das SO₂ aufoxidiert und reagiert mit dem kalzinierten Kalk zu Gips (CaSO₄):

CaO + ½ O₂ + SO₂ → CaSO₄

Bei dem erfindungsgemäßen Verfahren wird das mittels Oxidation von Schwefelwasserstoff entstehende Schwefeloxid sofort an dem Calciumoxid in dem wenigstens teilweise kalzinierten Rohmehlanteil gebunden und zu Gips (CaSO₄) bzw. zu entsprechenden Gipsverbindungen umgewandelt. CaSO₄ wiederum dient in Zement als Abbinderegler um die Aushärtungsgeschwindigkeit des Zements bzw. Betons zu steuern. Üblicherweise muss dem Zement daher CaSO₄ gezielt zugesetzt werden. Da bei dem erfindungsgemäßen Verfahren der über den im Rohbiogas enthaltenen Schwefelwasserstoff entstehende Gips wenigstens einen Teil des als Abbinderegler benötigten Gipses ersetzt, kann auf den Zusatz weiteren Gipses verzichtet werden bzw. ein entsprechend geringerer Teil zugesetzt werden.

Der im Rohbiogas enthaltene Ammoniak dient bei dem erfindungsgemäßen Verfahren als Stickoxid-reduzierendes Mittel. Der unerwünschte Stickoxidgehalt in den Brenngasen wird durch das Ammoniak-haltige Rohbiogas signifikant vermindert. Die bei der Reduktion ablaufenden Reaktionen lassen sich wie folgt darstellen:

4 NO + O₂ + 4 NH₃ → 4 N₂ + 6 H₂O

2 NO₂ + O₂ + 4 NH₃ → 3 N₂ + 6 H₂O

Die Stickoxidreduktion mit Ammoniak kann als selektive nicht-katalytische Reduktion (SNCR) oder als katalytische Stickoxidreduktion (SCR) erfolgen. Geeignete Katalysatoren, geeignete Reduktionsbedingungen sowie geeignete apparative Ausgestaltungen für die Entstickung bei der thermalen Behandlung von Rohstoffen sind beispielsweise in der DE 42 08 977, DE 19 756 392, DE 197 28 699 sowie DE 196 52 740 beschrieben.

Das für das erfindungsgemäße Verfahren verwendete Rohbiogas kann zu der Zementherstellungsanlage transportiert werden oder aber über direkte Verbindungsleitungen aus einer Biogasanlage in die Zementanlage überführt werden. Gemäß einer exemplarischen Ausführungsform der Erfindung ist die Biogasanlage direkt an die Anlage zur thermalen Behandlung der Rohstoffe angegliedert.

Bei dem erfindungsgemäßen Verfahren stellt das Rohbiogas demnach nicht nur eine Alternative zu den herkömmlichen nicht erneuerbaren Brennstoffen dar, sondern wirkt sich in vorteilhafter Weise auf die Stickoxidreduktion und die zuzusetzende Menge an Gips als Abbinderegler aus. Darüber hinaus werden die mit dem Einsatz von alternativen minderwertigen Brennstoffen verbundenen Nachteile vermieden.

Der im Rohbiogas enthaltene Kohlendioxidgehalt stellt keine zusätzliche Umweltbelastung dar, da das Kohlendioxid biogenen Ursprung hat, also bei der Verrottung bzw. Zersetzung des biologischen Materials entsteht und ohnehin in die Atmosphäre freigesetzt wird. Insoweit hat das erfindungsgemäße Verfahren den zusätzlichen Vorteil, dass kein CO₂ aus nicht erneuerbaren Energiequellen emittiert wird.

Gemäß einer Ausführungsform der Erfindung wird als Rohstoff Zementrohmehl, Kalkstein, Dolomit oder Magnesit eingesetzt. Das erfindungsgemäße Verfahren eignet sich insbesondere für die Herstellung von Zement bzw. Branntkalk.

Gemäß einer weiteren Ausführungsform der Erfindung wird als Rohstoff ein partikulärer Rohstoff verwendet.

Die erfindungsgemäßen Vorteile der Stickoxidreduktion und Gips-Bildung aus den im Rohbiogas enthaltenen Ammoniak und Schwefelwasserstoff kommen insbesondere bei der Herstellung von Zementklinkern zum Tragen. Gemäß einer weiteren Ausführungsform der Erfindung wird daher als Rohstoff Zementrohmehl eingesetzt, welches bei der thermischen Behandlung wenigstens teilweise kalziniert und/oder in Zementklinker umgewandelt wird.

Die Stickoxidreduktion lässt sich in besonders effizienter Weise gemäß einer Ausführungsform der Erfindung erreichen, bei dem das Rohbiogas Ammoniak in einer Menge von wenigstens 0,5 mg/m³, vorzugsweise von wenigstens 1,0 mg/m³, mehr bevorzugt von wenigstens 1,5 mg/m³ und am meisten bevorzugt von wenigstens 2,0 mg/m³ enthält.

Die Erzeugung von Gips bei der thermischen Behandlung von Rohstoff erfolgt gemäß einer Ausführungsform der Erfindung mit Rohbiogas, das Schwefelwasserstoff in einer Menge von wenigstens 100 mg/m³, vorzugsweise von wenigstens 500 mg/m³, mehr bevorzugt von wenigstens 5.000 mg/m³, und am meisten bevorzugt von wenigstens 15.000 mg/m³ enthält. Gemäß einer weiteren Ausführungsform der Erfindung enthält das Rohbiogas nur geringe Mengen an Schwefelwasserstoff, vorzugsweise weniger als 500 mg/m³. Ein geringer Schwefelwasserstoff-Gehalt kann insbesondere dann wünschenswert sein, wenn bereits mit dem Rohstoff größere bzw. ausreichende Mengen Schwefel eingetragen werden.

Die thermische Behandlung erfolgt gemäß einer weiteren Ausführungsform der Erfindung bei Temperaturen im Bereich zwischen 500°C und 2.000°C und vorzugsweise bei Temperaturen zwischen 700°C und 1.500°C, da in diesen Temperaturbereichen die Kalzinierung von z.B. Zementmehl bzw. Kalk stattfindet.

Gemäß einer bevorzugten Ausführungsform der Erfindung wird das Rohbiogas vor der Zufuhr in den Reaktionsraum (z.B. Drehrohrofen) erwärmt um eine durch Abkühlung des Gases hervorgerufene Wasserkondensation in den Rohrleitungen der verwendeten Anlage zu verhindern. Die Erwärmung des Rohbiogases kann gemäß einer weiteren Ausführungsform durch Nutzung der bei der thermischen Behandlung entstehenden Abwärme erzielt werden. Gemäß einer weiteren Ausführungsform der Erfindung kann die bei der thermischen Behandlung entstehende Abwärme auch für die Erzeugung von Biogas bzw. die Regulierung der Biogaserzeugung in einer entsprechenden Biogasanlage eingesetzt werden. Die Abwärme kann also direkt zur Temperaturführung in einer gegebenenfalls angeschlossenen Biogasanlage verwendet werden.

Gemäß einer weiteren Ausführungsform der Erfindung werden die bei der thermischen Behandlung entstehenden Stickoxide, die in den Verbrennungsabgasen enthalten sind, reduziert. Der im Rohbiogas enthaltene Ammoniak wirkt hierbei als Stickoxid-reduzierendes Mittel.

Gemäß einer weiteren Ausführungsform der Erfindung erfolgt die Stickoxidreduktion in Gegenwart eines Katalysators. Die entsprechende Stickoxidreduktionszone kann gemäß einer Ausführungsform der Erfindung der eigentlichen Verbrennungs- bzw. Kalzinierstufe nachgeschaltet sein. Beispielsweise kann der Kalzinierzone ein Wirbelbettreaktor mit entsprechenden katalytischen Materialien nachgeschaltet werden, in welchem der im Biogas enthaltene Ammoniak die in den Abgasen enthaltenen Stickoxide entsprechend reduziert.

Der im Rohbiogas enthaltene Schwefelwasserstoff wird gemäß einer weiteren Ausführungsform der vorliegenden Erfindung in Calciumsulfat überführt.

Gemäß einer weiteren Ausführungsform der Erfindung werden neben Rohbiogas ein oder mehrere weitere Brennstoffe für die thermische Behandlung verwendet.

Gemäß einem weiteren Aspekt der Erfindung wird eine Vorrichtung zur Durchführung des erfindungsgemäßen Verfahrens bereitgestellt. Die Vorrichtung ist so ausgestaltet, dass Rohbiogas als Brennstoff bei der thermischen Behandlung von Rohstoff eingesetzt werden kann.

Eine erfindungsgemäße Vorrichtung weist gemäß einer exemplarischen Ausführungsform der Erfindung auf:
- eine Einrichtung zur Bereitstellung von Rohbiogas,
- eine Einrichtung zur thermischen Behandlung von Rohstoff,
wobei die Einrichtung zur thermischen Behandlung von Rohstoff mit der Einrichtung zur Bereitstellung von Rohbiogas über wenigstens eine Zuleitung verbunden ist, so dass die thermische Behandlung des Rohstoffs unter Zufuhr von Rohbiogas als Brennstoff erfolgen kann.

Gemäß einer exemplarischen Ausführungsform ist die Einrichtung zur Bereitstellung von Rohbiogas eine Biogasanlage.

Die Bereitstellung einer Biogasanlage in unmittelbarer Nähe zu einer Vorrichtung zur thermischen Behandlung von Rohstoff, beispielsweise einer Zementherstellungsanlage, hat nicht nur den Vorteil, dass das Biogas nicht als Gefahrgut transportiert werden muss, sondern gestattet auch die Regulierung der Biogaserzeugung mit Hilfe der bei der thermischen Behandlung entstehenden Abwärme. Insoweit kann der Biogasbedarf mit Hilfe der beim Brennvorgang entstehenden Abwärme in der Biogasanlage bzw. dem Faulturm reguliert werden.

Gemäß einer exemplarischen Ausführungsform der Erfindung handelt es sich bei der Einrichtung zur thermischen Behandlung von Rohstoff um einen Drehrohrofen, einem Wirbelschichtofen oder einen Schachtofen.

Es kann vorteilhaft sein, in Anlagen zur Kalzinierung von Rohstoffen eine zusätzliche Kalzinierstufe vorzuschalten. Gemäß einer weiteren exemplarischen Ausführungsform der Erfindung ist der Einrichtung zur thermischen Behandlung von Rohstoff ein mit Biogas beheizter Kalzinierofen vorgeschaltet. Vorteilhafte Ausgestaltungen des Kalzinierofens bzw. der vorgeschalteten zusätzlichen Kalzinierstufe und entsprechender Anlagen sind in der DE 102 02 776 und WO92/03691 ausführlich beschrieben.

Gemäß einer weiteren Ausführungsform der Erfindung weist die erfindungsgemäße Vorrichtung keinen Gaszwischenspeicher auf.

Um die Kondensation von Wasser in den das Rohbiogas zuführenden Zuleitungen zu verhindern wird gemäß einer Ausführungsform der Erfindung das Rohbiogas mittels einer der Einrichtung zur thermischen Behandlung von Rohstoff vorgeschalteten Einrichtung vorgewärmt bzw. erwärmt. Die für die Erwärmung bzw. Erwärmung notwendige thermische Energie kann aus der bei der thermischen Behandlung entstehenden Abwärme entstammen.

Gemäß einer weiteren exemplarischen Ausführungsform der Erfindung lässt man das Rohbiogas (beispielsweise in der Zuleitung) abkühlen und sammelt das bei der Abkühlung entstehende Kondensationswasser. Der im Rohbiogas enthaltene Ammoniak löst sich bei dem Abkühlungsvorgang wenigstens teilweise im Kondensationswasser. Das Ammoniak-haltige Kondensationswasser kann dann wiederum als Reduktionsmittel zur Entstickung der bei der thermischen Behandlung entstehenden NOx-haltigen Abgase eingesetzt werden.

Gemäß einer weiteren exemplarischen Ausführungsform der Erfindung weist die erfindungsgemäße Vorrichtung eine Einrichtung zur Entfernung oder Reduktion von Stickoxiden aus den bei der thermischen Behandlung entstehenden Abgasen auf. Die Stickoxidreduktion kann in der eigentlichen Reaktionszone stattfinden oder aber in einer der Reaktions- bzw. Brennzone nachgeschalteten Entstickungszone.

Gemäß einer weiteren exemplarischen Ausführungsform der Erfindung ist die Einrichtung zur Entfernung oder Reduktion von Stickoxiden als Wirbelschichtreaktor ausgestaltet.

In dieser Patentanmeldung offenbarte Ausgestaltungen der Vorrichtung(en) gelten auch für das erfindungsgemäße Verfahren, und umgekehrt.

Desweiteren betrifft die vorliegende Erfindung die Verwendung von Rohbiogas zur thermischen Behandlung von Rohstoffen sowie die Verwendung von Rohbiogas zur Reduktion von Stickoxiden bei der thermischen Behandlung von Rohstoffen.

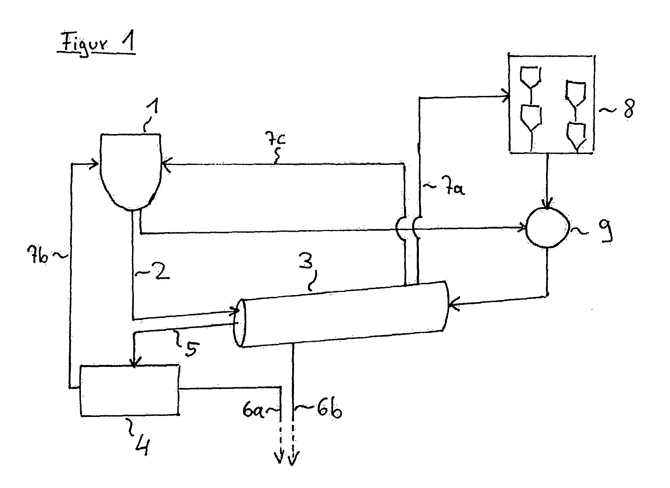

Weitere Aspekte der Erfindung sind nachfolgend anhand eines in Figur 1 schematisch dargestellten Ausführungsbeispiels näher erläutert. Figur 1 veranschaulicht eine Gesamtansicht einer Vorrichtung zur thermischen Behandlung von partikulärem Rohstoff gemäß einem exemplarischen Ausführungsbeispiel der Erfindung:

Bei dem erfindungsgemäßen Verfahren zur thermischen Behandlung von Rohstoff, wie beispielsweise Zementrohmehl, wird Rohbiogas als Brennstoff in die Reaktionszone zugeführt. Das Rohbiogas stammt entweder aus einem entsprechenden Vorratsbehälter oder aus einer vor Ort installierten Biogasanlage. Der Vorratsbehälter bzw. die Biogasanlage (1) liefert das Rohbiogas über die Zuleitung (2) in die Reaktionszone (3). Gemäß einer Ausführungsform der Erfindung ist die Reaktionszone ein Drehrohrofen. In dem Drehrohrofen wird der zugeführte Rohstoff, beispielsweise das Zementrohmehl, bei entsprechend hohen Temperaturen gebrannt bzw. kalziniert. Das dem Ofen zugeführte Rohbiogas wird gemäß einer weiteren exemplarischen Ausführungsform der Erfindung vor oder in der Zuleitung (2) erwärmt um eine Wasserkondensation, welche in der Rohrleitung beim Abkühlen des Gases auftreten würde, zu verhindern. Die Erwärmung bzw. Vorwärmung des Biogases kann beispielsweise durch die thermische Energie aus der Abluft vom Klinkerkühler (4) oder vom Ofen (3) erfolgen. Die Abluft aus dem Klinkerkühler wird auch als Tertiärluft bezeichnet. Das in dem Ofen (3) gebrannte Zementrohmehl wird als Zementklinker über die Leitung (5) in den Klinkerkühler (4) überführt. Die bei dem Verbrennungsvorgang erhaltenen Abgase können gemäß einer exemplarischen Ausführungsform der Erfindung über die Leitungen (6a) und/oder (6b) aus dem Klinkerkühler (4) bzw. dem Ofen (3) abgeleitet werden. Die Abgaswärme kann gemäß einer weiteren exemplarischen Ausführungsform für das Vorwärmen des Rohbiogases oder des Vorwärmen des Zementrohmehls, beispielsweise über die Zuleitungen (7a), (7b) und/oder (7c) erfolgen. Das Vorwärmen des zu behandelnden, Rohstoffs (beispielsweise Zementrohmehl) kann in einer Vorwärmzone (8) erfolgen. Typischerweise beinhaltet die Vorwärmzone (8) mehrere Zyklone bzw. Wärmetauscheinheiten. Geeignete Ausgestaltungen der Wärmetauschersysteme sind dem Fachmann bekannt.

Gemäß einer weiteren exemplarischen Ausführungsform der Erfindung findet die thermische Behandlung des Rohstoffs nicht nur im eigentlichen Brennofen (3) statt, sondern auch in einem dem Ofen vorgeschalteten zusätzlichen Kalzinierofen (9). Der Kalzinierofen (9) kann gemäß der vorliegenden Erfindung ebenfalls mit Rohbiogas beheizt werden. Wenigstens ein Teil des aus dem Wärmetauschersystem (8) abgeleiteten Rohstoffs, beispielsweise Zementrohmehl, wird in dieser Vorkalzinierstufe wenigstens zum Teil kalziniert. Zu diesem Zweck wird der Kalzinator vorzugsweise mit einer Rohbiogas betriebenen Zweitfeuerung ausgestattet. Gegebenenfalls kann gemäß einer weiteren exemplarischen Ausführungsform der Erfindung zwischen Kalzinierofen (9) und Drehrohrofen (3) eine Mischzone vorgesehen sein. In der Mischzone werden durch das Einstellen der erforderlichen Mischtemperatur des Rohmehlgemisches Schwefeldioxid und andere im zugeführten Rohmehl enthaltene Schadstoffe verflüchtigt bzw. freigesetzt, wobei die freigesetzten bzw. gebildeten Schwefeloxide, insbesondere Schwefeldioxid, an das Calciumoxid, das mit dem bereits hochaufgeheizten und wenigstens teilweise kalzinierten Rohmehlanteil in die Mischzone eingebracht wird, gebunden und zu Gips bzw. entsprechenden Gipsverbindungen umgewandelt wird. Die aus der Reaktion von Calciumoxid mit Schwefeldioxid entstehenden Feststoffe (Gips) bilden einen Bestandteil des letztendlich erhaltenen Feststoffprodukts (Zementklinker).

Es bilden sich beim Brennen im Drehrohrofen (3) und beim Kalzinieren im Vorkalzinierofen (9) Stickoxide, die aus den Abgasen entfernt werden müssen, ehe diese in die Umgebung gelangen. Das in dem erfindungsgemäßen Verfahren und der erfindungsgemäßen Vorrichtung als Brennstoff eingesetzte Rohbiogas enthält signifikante Mengen Ammoniak, die als Reduktionsmittel gegenüber den Stickoxiden fungieren können. Ammoniak reduziert die Stickoxide in Gegenwart von Sauerstoff bei Temperaturen von etwa 800 bis 1100°C zu Stickstoff. Die erhaltenen Endprodukte, Stickstoff und Wasser, können bedenkenlos emittiert werden. Je nach dem Ammoniakgehalt des verwendeten Rohbiogases können gegebenenfalls zusätzlich Ammoniak bzw. Ammoniak-freisetzende Verbindungen zur Entstickung der Abgase eingesetzt werden. In einer exemplarischen Ausführungsform der Erfindung wird neben dem in Rohbiogas enthaltenen Ammoniak kein weiterer Ammoniak als Reduktionsmittel zugesetzt.

Für eine Zementanlage mit einer Klinkerleistung von 40 t/h ergibt sich für die Kalzinierung von Zementrohmehls ein Energiebedarf von etwa 60 GJ/h. Rohbiogas besitzt einen mittleren Heizwert von 23,5 MJ/m³. Somit ergibt sich ein Biogasbedarf von etwa 2550 m³/h

Ergänzend wird darauf hingewiesen, dass "aufweisen" keine anderen Elemente oder Schritte ausschließt und "eine" oder "ein" keine Mehrzahl ausschließt. Ferner sei daraufhingewiesen, dass Merkmale oder Schritte, die mit Verweis auf eines der obigen Ausführungsbeispiele bzw. Ausführungsformen beschrieben worden sind, auch in Kombination mit anderen Merkmalen überschritten oder anderer oben beschriebener Ausführungsbeispiele verwendet werden können. Bezugszeichen in den Ansprüchen sind nicht als Einschränkung anzusehen.

## Patentansprüche

1. Verfahren zur thermischen Behandlung von Rohstoff, wobei die thermische Behandlung des Rohstoffs unter Zufuhr von Rohbiogas als Brennstoff erfolgt.

2. Verfahren nach Anspruch 1, wobei es sich bei dem Rohstoff um Zementrohmehl, Kalkstein, Dolomit oder Magnesit handelt.

3. Verfahren nach Anspruch 1 oder 2, wobei der Rohstoff in partikulärer Form vorliegt.

4. Verfahren nach einem der vorhergehenden Ansprüche, wobei es sich bei dem Rohstoff um Zementrohmehl handelt, welches bei der thermischen Behandlung wenigstens teilweise kalziniert und/oder in Zementklinker umgewandelt wird.

5. Verfahren nach einem der vorhergehenden Ansprüche, wobei das Rohbiogas Ammoniak in einer Menge von wenigstens 0,5 mg/m³, vorzugsweise von wenigstens 1,0 mg/m³, mehr bevorzugt von wenigstens 1,5 mg/m³und am meisten bevorzugt von wenigstens 2,0 mg/m³ enthält.

6. Verfahren nach einem der vorhergehenden Ansprüche, wobei das Rohbiogas Schwefelwasserstoff in einer Menge von wenigstens 100 mg/m³, vorzugsweise von wenigstens 500 mg/m³, mehr bevorzugt von wenigstens 5.000 mg/m³und am meisten bevorzugt von wenigstens 15.000 mg/m³ enthält.

7. Verfahren nach einem der vorhergehenden Ansprüche, wobei die thermische Behandlung bei Temperaturen im Bereich zwischen 500°C und 2000°C und vorzugsweise bei Temperaturen zwischen 700°C und 1500°C erfolgt.

8. Verfahren nach einem der vorhergehenden Ansprüche, wobei vorgewärmtes Rohbiogas als Brennstoff verwendet wird.

9. Verfahren nach einem der vorhergehenden Ansprüche, wobei die bei der thermischen Behandlung entstehende Abwärme für die Erzeugung von Rohbiogas eingesetzt wird.

10. Verfahren nach einem der vorhergehenden Ansprüche, wobei in den bei der thermischen Behandlung entstehenden Abgasen enthaltene Stickoxide reduziert werden.

11. Verfahren nach Anspruch 9, wobei die Reduktion der Stickoxide in Gegenwart eines Katalysators erfolgt.

12. Verfahren nach einem der vorhergehenden Ansprüche, wobei der im Rohbiogas enthaltene Schwefelwasserstoff in CaSO₄ überführt wird.

13. Vorrichtung zur Durchführung des Verfahrens nach einem der Ansprüche 1 bis 12, wobei die Vorrichtung aufweist:
- eine Einrichtung zur Bereitstellung von Rohbiogas,
- eine Einrichtung zur thermischen Behandlung von Rohstoff,
wobei die Einrichtung zur thermischen Behandlung von partikulärem Rohstoff mit der Einrichtung zur Bereitstellung von Rohbiogas über wenigstens eine Zuleitung verbunden ist, so dass die thermische Behandlung des Rohstoffs unter Zufuhr von Rohbiogas als Brennstoff erfolgen kann.

14. Vorrichtung nach Anspruch 13, wobei die Einrichtung zur thermischen Behandlung von Rohstoff ein Drehrohrofen, Wirbelschichtofen oder ein Schachtofen ist.

15. Vorrichtung nach einem der Ansprüche 13 oder 14, wobei der Einrichtung zur thermischen Behandlung von Rohstoff ein mit Rohbiogas beheizter Kalzinierofen vorgeschaltet ist.

16. Vorrichtung nach einem der vorhergehenden Ansprüche, wobei die Vorrichtung keinen Gaszwischenspeicher aufweist.

17. Vorrichtung nach einem der vorhergehenden Ansprüche, wobei die Vorrichtung eine Einrichtung zur Erwärmung des Rohbiogases aufweist.

18. Vorrichtung nach einem der vorhergehenden Ansprüche, wobei die Vorrichtung eine Einrichtung zur Reduktion von Stickoxiden aufweist, die der Einrichtung zur thermischen Behandlung von Rohstoff vorzugsweise nachgeschaltet ist.

19. Vorrichtung nach Anspruch 18, wobei die Einrichtung zur Reduktion von Stickoxiden als Wirbelschichtreaktor ausgestaltet ist.

20. Verwendung von Rohbiogas zur thermischen Behandlung von Rohstoffen.

21. Verwendung von Rohbiogas zur Reduktion von Stickoxiden bei der thermischen Behandlung von Rohstoffen.
